# EUROPEAN PATENT APPLICATION

(11) **EP 1 185 059 A2**
(43) Date of publication of application: **06.03.2002**
(21) Application number: 01307335.8
(22) Date of filing: 29.08.2001
(51) Int. Cl.: H04M 1/82, H04M 11/06

(54) **Telephone set**

(30) Priority: 30.08.2000 JP 2000261583
(71) Applicant: SONY CORPORATION, Tokyo (JP)
(72) Inventor: Ichiyama, Yoshihito, c/o Sony Corporation, Shinagawa-ku, Tokyo (JP)
(74) Representative: Ayers, Martyn Lewis Stanley

(57) **Abstract**

To enable the simple and satisfactory connection of a plurality of telephone sets, data communication devices and similar to a single telephone line. A telephone set comprises a telephone circuitry portion, connected to a telephone line via switching means; an external equipment terminal, connected to the telephone line via switching means; line capture detection means which detects capture of the telephone line by a device connected to the external equipment terminal; and control means, which causes the first switching means, to be disconnected while the line capture detection means detects line capture, causes the second switching means, to be disconnected while telephone line capture by the telephone circuitry portion is detected, and causes the switching means to all be in the connected state when neither line capture is detected.

## Description

This invention relates to a telephone set connected, for example, to general subscriber telephone lines, and in particular relates to a telephone set designed such that other external equipment can be connected to the telephone set.

A terminal part called a modular jack is connected to the telephone lines laid in ordinary houses and similar; by connecting this modular jack with the modular plug at the other end of the telephone line one end of which is connected to a telephone set, the telephone set is connected to the telephone line. A plurality of telephone sets can be connected to a single telephone line, and branch devices and similar are provided in order to form branches in this single telephone line. In addition to telephone sets for voice communication, equipment connected to the telephone line includes fax devices and modems for data communication; due to the spread of these devices, situations in which numerous devices are connected to a single telephone line have become widespread.

However, when a telephone set for voice communication and a fax device or modem for data communication are connected to a single telephone line, if these devices are connected in parallel to the telephone line, when data communication is performed using the fax device or modem for data communication, if the receiver of the telephone set for voice communication is lifted, or there is some other off-hook operation, the telephone set circuit is connected to the telephone line during data communication, a communication error occurs, and data communication is interrupted.

In the past, in order to solve such problems, it was conceivable to use what is called an automatic converter as a device which branches a single telephone line. For example, when this automatic converter is used to connect a two devices--a telephone set for voice communication, and a fax device--to a single telephone line, while one of the devices is in use, this equipment causes the telephone line to the other device to be disconnected.

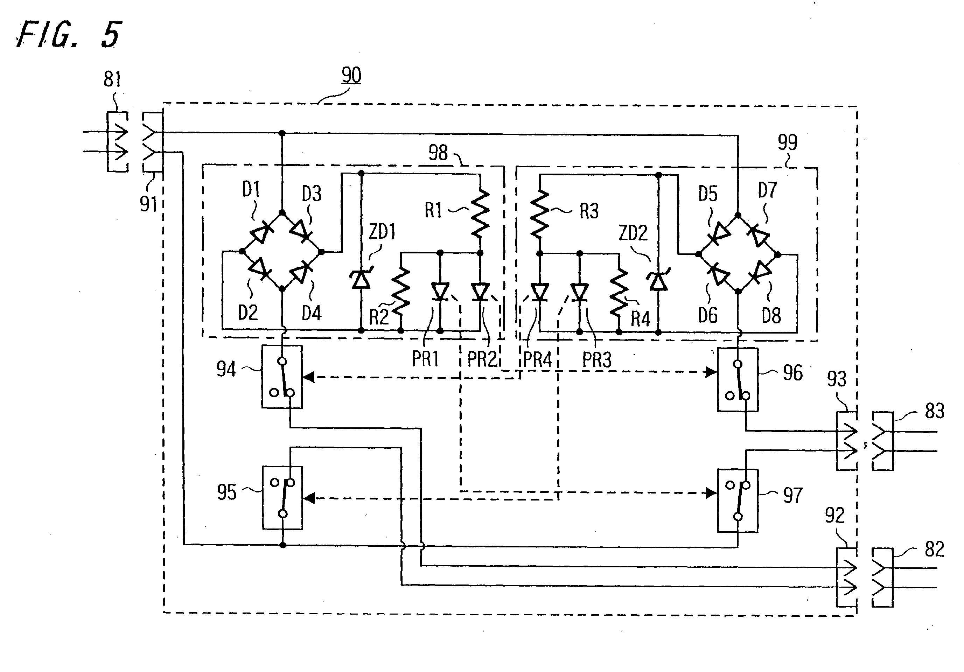

Fig. 5 shows the internal circuitry configuration of automatic converters of the prior art. Here, the automatic converter 90 is the type enabling connection of two devices, and comprises a modular jack 91 connected to an office line modular plug 81 which is connected to the exchange side of the telephone central office, and two modular jacks 92, 93 connected to modular plugs 82, 83 which are connected to a telephone set and other equipment. One of the lines L₁ among the two lines (L₁, L₂) connected to the modular jack 91 is branched into two, and one of these branch lines is connected to the first line capture detection circuit 98 and the modular jack 92 via the switch 94, while the other branch line is connected to the second line capture detection circuit 99 and the modular jack 93 via the switch 96.

The other line L₂ is branched into two, and one of these branch lines is connected to the modular jack 92 via the switch 95, while the other branch line is connected to the modular jack 93 via the switch 97.

The switches 94, 95 connected to the modular jack 92 are configured such that opening and closing is controlled by the second line capture detection circuit 99 connected to the line on the side of the modular jack 93, and the switches 96, 97 connected to the modular jack 93 are configured such that opening and closing is controlled by the first line capture detection circuitry 98 connected to the line on the side of the modular jack 92.

As the configuration of the first line capture detection circuitry 98, here a connected configuration is assumed in which a diode bridge comprising four diodes D1, D2, D3, D4 is connected to the line, and signals flowing in this line are extracted by the diode bridge, flow through a first and second control element PR1, PR2 via a resistor R1, and return to the line from the diode bridge. A resistor R2 is connected in parallel with the first and second control elements PR1, PR2, and a Zener diode ZD1 is connected to set the voltage applied to both the control elements PR1, PR2 within a fixed range. The first control element PR1 controls the opening and closing of the switch 97; the second control element PR2 controls the opening and closing of the switch 96. The respective control elements PR1, PR2 exercise control such that, when a current occurs corresponding to the signal flowing in the line at the time of line capture, the switches 96, 97 are in the open state, and when this current does not occur, they are in the closed state.

The configuration of the second line capture detection circuitry 99 is the same as that of the first line capture detection circuitry 98; a diode bridge comprising four diodes D5, D6, D7, D8 is connected to the line, and signals flowing in this line are extracted by the diode bridge, flow into third and fourth control elements PR3, PR4 via a resistor R3, and return to the line from the diode bridge. A resistor R4 is connected in parallel with the third and fourth control elements PR3, PR4, and a Zener diode ZD2 is connected to set the voltage applied to both the control elements PR3, PR4 within a fixed range. The third control element PR3 controls the opening and closing of the switch 95; the fourth control element PR4 controls the opening and closing of the switch 94. The respective control elements PR3, PR4 exercise control such that, when a current occurs corresponding to the signal flowing in the line at the time of line capture, the switches 94, 95 are in the open state, and when this current does not occur, they are in the closed state.

Through this configuration, when neither of the devices (here assumed to be telephone sets) connected to the two modular jacks 92, 93 provided for this automatic converter is being used, all the switches 94, 95, 96, 97 are in the closed state, and the two telephone sets connected to the two modular jacks 92, 93 are in a state of connection to the office line connected to the modular jack 91, so that two telephone sets can be made to ring by ringing signals from the telephone central office.

When for example there is an off-hook operation in response to this ringing at the telephone set connected to one of the modular jacks 92, and the line is captured, the line capture is detected by the first line capture detection circuitry 98 connected to this modular jack 92, the switches 96, 97 connected to the modular jack 93 are put into the open state, and the telephone set connected to the modular jack 93 is disconnected from the telephone line. In the event of line capture by the telephone set connected to the other modular jack 93, line capture is detected by the second line capture detection circuitry 99, the switches 94, 95 connected to the modular jack 92 are put into the open state, and the telephone set connected to the modular jack 92 is disconnected from the telephone line.

Hence, while one of the two telephone sets connected to this automatic converter 90 is in use, the other telephone set is disconnected from the telephone line, so that there can be no interruption in the telephone line by the other telephone set when one telephone set is in use, and in the case of a telephone set for voice communication, the contents of the voice communication cannot be heard from the other telephone set, so that a so-called confidentiality function is obtained. Further, when a fax device or modem device is connected in place of a telephone set, cutoff of the data communication performed by these devices due to interruption by another telephone set is prevented.

However, if such an automatic converter is provided, the need arises to connect an extra device between telephone sets and telephone lines, and there is the problem that labor is required for connection. Further, because line capture must be detected within the automatic converter, line capture circuitry is connected; but if such a detection circuitry is connected¹ to the telephone line, a corresponding load is then connected to the telephone line, and there are problems such as a decrease in data transmission rate and decline in audio quality during voice communication.

This invention was devised in light of these circumstances, in order to enable the simple and satisfactory connection of a plurality of telephone sets, data communication devices, and similar to a single telephone line.

In order to solve these problems, in this invention, a telephone set comprises a telephone circuitry portion which is connected to a telephone line via a first switching means; an external equipment terminal which is connected to the telephone line via a second switching means; line capture detection means for detecting the capture of a telephone line by equipment connected to the external equipment terminal; and, control means, which causes the first switching means to be disconnected while the line capture means detects line capture, and which causes the second switching means to be disconnected while the telephone circuitry portion detects telephone line capture, and which causes both of the switches to be in the connected state when neither of the respective line capture [states] is detected.

By providing the telephone set of this invention, upon connecting this telephone set t²o a telephone line, by for example connecting a fax device or modem device for data communication to the external equipment terminal, when the telephone line is used by the equipment connected to this external equipment terminal, the telephone circuitry portion of the telephone set is disconnected from the telephone line, a state is entered in which voice communication using this telephone set is not possible during data communication, and the occurrence of problems such as communication errors caused by interruption by this telephone set can be prevented. Further, when the telephone line is used by the telephone circuitry portion of the telephone set, the equipment connected to the external equipment terminal is disconnected from the telephone line, so that there is no interruption by other equipment of communication using this telephone set, and problems such as a decline in audio quality can be prevented.

The invention will be more clearly understood from the following description, given by way of example only, with reference to the accompanying drawings, in which:
Fig. 1 is a block diagram showing an example of a telephone set of one embodiment of this invention;
Fig. 2 is a perspective view showing an example of the external appearance of the telephone set of one embodiment of this invention;
Fig. 3 is a flow chart showing an example of operation during data communication of one embodiment of this invention;
Fig. 4 is a flow chart showing an example of operation during voice communication of one embodiment of this invention; and
Fig. 5 is a block diagram showing one example of a telephone line automatic converter of the prior art.

Below an embodiment of the invention is explained, referring to the attached figures.

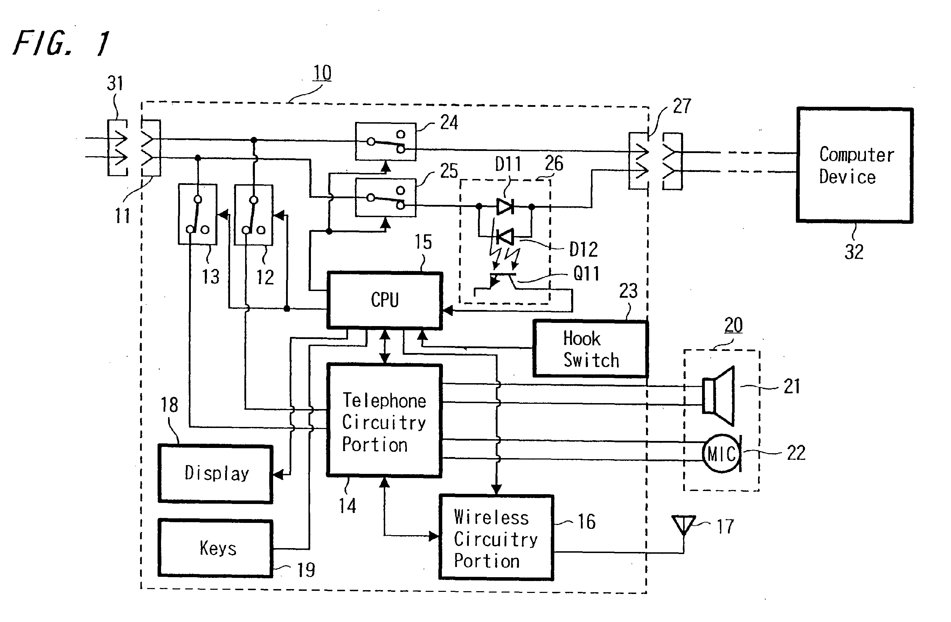

Fig. 1 is a drawing showing an example of the overall configuration of a telephone set of this example. In this example, a telephone set is connected to a wire telephone line, which is an office line connected with the telephone central office, and comprises a line modular jack 11 for connection to a modular plug 31 on the office line side, connected to an end of the line comprised by the telephone line. [The telephone set] further comprises a data communication modular jack 27, as an external equipment terminal for connection of equipment other than this telephone set to the telephone line. Here the jack 27 is stated to be for data communication; however, equipment which can be connected is not limited to modem devices or other data communication equipment, and various types of equipment which can be connected to telephone lines, such as ordinary telephone sets and fax devices, can be connected. In the example of Fig. 1, the modem of a computer device 32 is connected to the data communication modular jack 27.

The telephone set 10 of this example is a telephone set to which a handset 20 is connected, and for which voice communication is possible using this handset 20. That is, the two lines L₁, L₂ connected to the line modular jack 11 are connected to the telephone circuitry portion 14 via separate switches 12, 13, and a speaker 21 and microphone 22 incorporated into the handset 20 are connected to this telephone circuitry portion 14. In the telephone circuitry portion 14, sending and receiving processing for telephone communication are performed, based on the control of the central processing unit (CPU) 15 which controls the operation of each portion of the telephone set 10. By assuming the open state, the switches 12, 13 disconnect the telephone circuitry portion 14 from the telephone line; control of the switch opening and closing is executed by the CPU 15. The two switches 12, 13 controlled by this CPU 15 comprise, for example, a semiconductor switch using a photo-MOS relay. A hook switch 23 is provided in the area where the handset 20 of the telephone set 10 of this example is placed, and the state of this hook switch 23 is detected by the CPU 15.

The telephone set 10 of this example is provided with functions for use as the master unit of a cordless telephone, and to this end comprises a wireless circuitry portion 16. Signals obtained from the telephone line by the telephone circuitry portion 14 are wirelessly transmitted to the slave unit (not shown) from the antenna 17 connected to the wireless circuitry portion 16, and signals sent from the slave unit and received by the antenna 17 are received and processed by the wireless circuitry portion 16 and can be sent to the telephone circuit. Wireless communication with the slave unit using this wireless circuitry portion 16 is executed under control by the CPU 15.

The telephone set 10 of this example comprises a display portion 18 which displays telephone numbers, names, functions, and similar using numerals, characters, symbols and similar under control of the CPU 15, and keys 19 which indicate telephone numbers and similar to the CPU 15.

Next, the configuration between the line modular jack 11 and the modular jack 27 for data communication in the telephone set 10 of this example is explained. The two lines L₁, L₂ connected to the line modular jack 11 are branched separately from the switches 12, 13, and are connected to the modular jack 27 for data communication via the respective switches 24, 25. By assuming the open state, the switches 12, 13 disconnect the telephone circuitry portion 14 from the telephone line; for example, [these switches] may comprise a semiconductor switch using a photo-MOS relay, and opening and closing are controlled by the CPU 15. Light-emitting diodes D11, D12 within a photocoupler 26 are connected between one of these switches 25 and the jack 27. This photocoupler 26 constitutes telephone line capture detection means; the two light-emitting diodes D11, D12 are connected in opposite directions, and emit light whatever the direction of signal flow.

When either of the light-emitting diodes D11, D12 within the photocoupler emits light above a fixed level, the phototransistor Q11 is turned on, and the CPU 15 detects this. In the case of this example, when the telephone line connected to the jack 11 is captured by a device (in the example of Fig. 1, the modem of a computer device 32) connected to the modular jack 27 for data communication, the phototransistor Q11 is turned on, and the CPU 15 is capable of judging this.

Each of the circuits in the telephone set 10 of this example operates using a power supply which is, for example, a low-voltage DC power supply obtained by rectification and transformation of a commercial AC power supply.

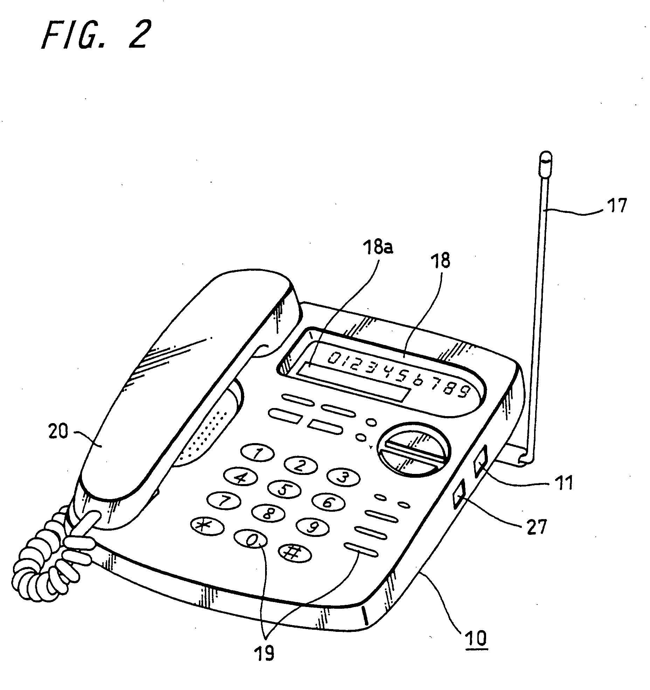

Fig. 2 shows one example of the shape of the telephone set 10 of this example. In the telephone set 10 of this example, the line modular jack 11 and the modular jack 27 for data communication are positioned, as jacks for connection, on a side face or similar of the telephone set body. The display 18 is designed to display various operating states in addition to displaying telephone numbers with a prescribed number of digits. Here "External terminal in use" is displayed in characters, indicating the state in which the data communication in-use display 18a is executed. This data communication in-use display 18a is performed when the CPU 15 within the telephone set judges that line capture is performed by the modular jack 27 for data communication.

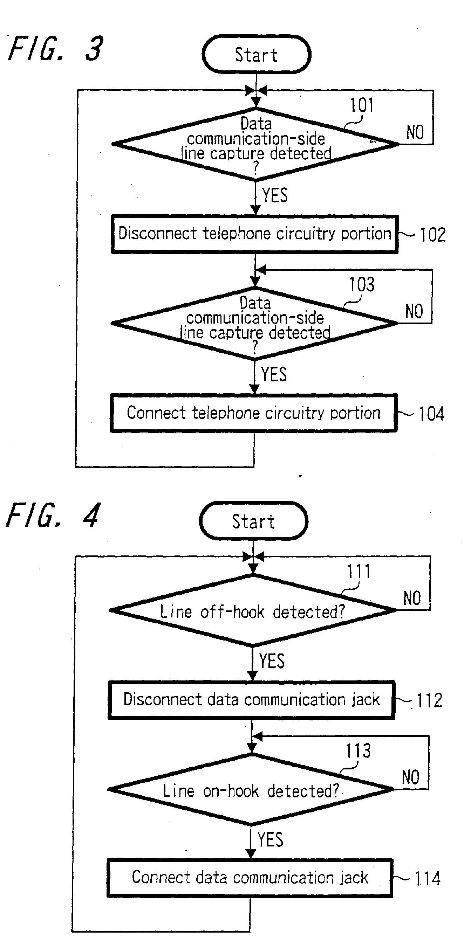

Next, an example of a state in which the CPU 15 of this example controls the switches 12, 13 connected to the telephone circuitry portion 14 and the switches 24, 25 connected to the modular jack 27 for data communication is explained, referring to the flow charts of Fig. 3 and Fig. 4.

Each of the switches 12, 13, 24, 25 is designed so as to be in the closed state while in the initial state. Hence in this initial state, calls by the telephone line can be detected by the telephone circuitry portion 14 within the telephone set 10, and when some kind of telephone set is connected to the modular jack 27 for data communication, calls by the telephone line can also be detected even by the connected telephone set, and calling from each of the devices (telephone sets) is also possible.

When telephone line capture by a device connected to the modular jack 27 for data communication is detected by the photocoupler 26 which is the telephone line capture detection means, the CPU 15 controls the switches 12, 13. The flow chart of Fig. 3 shows the control operation at this time. The explanation below follows Fig. 3; based on the detection output from the photocoupler 26, the CPU 15 judges whether or not there is telephone line capture by the device connected to the modular jack 27 for data communication (step 101). If line capture is not detected, [the CPU] waits without further action. If telephone line capture is detected, the switches 12, 13 are put into the open state under control of the CPU 15, and the telephone circuitry portion 14 is disconnected from the telephone line connected to the jack 11 (step 102).

After putting these switches 12, 13 into the open state, the CPU 15 judges the detection output from the photocoupler 26, and judges whether line capture is ended or not (step 103). If the end of line capture is not detected, [the CPU] waits while keeping the switches 12, 13 in the open state. If it is judged that line capture has ended, the switches 12, 13 are put into the closed state, and the telephone circuitry portion 14 is connected to the telephone line (step 104). After putting the switches 12, 13 into the closed state, execution returns to the judgment of step 101.

Next, the state of control when the telephone circuitry portion 14 of the telephone set 10 of this example is used is explained, referring to the flow chart of Fig. 4. At this time, a judgment is made as to whether the off-hook state is entered due to operation of a hook switch 23 (or reception of a hook switch operation signals from the slave device by the wireless circuitry portion 16). If the off-hook state is not detected, [the CPU] waits without further action. If the off-hook state is detected, the switches 24, 25 are put into the open state under control of the CPU 15, and the device connected to the modular jack 27 for data communication is disconnected from the telephone line connected to the jack 11 (step 112).

After these switches 24, 25 are put into the open state, the CPU 15 judges the state of the hook switch 23 and of the state of reception of hook switch operation signals from the slave unit at the wireless circuitry portion 16, and judges whether there has been a change from the off-hook state to the on-hook state (step 113). If a change to the on-hook state is not detected, [the CPU] waits with the switches 24, 25 left in the open state. When it is judged that there has been a change to the on-hook state, the switches 24, 25 are put into the closed state, and the device connected to the modular jack 27 for data communication is connected to the telephone line connected to the jack 11 (step 114). After putting these switches 24, 25 into the closed state, execution returns to step the judgment of 111.

By thus controlling each of the switches, when for example a computer or other data communication device is connected to the modular jack 27 for data communication of the telephone set 10 of this example, if there is an off-hook operation by the handset 20 or slave unit of this telephone set 10, during voice communication by this telephone set 10 the switches 24, 25 are in the open state, and the data communication device connected to the modular jack 27 is disconnected from the telephone line, so that there is no interruption during voice communication by data communication from the device connected to the jack 27, and the quality of voice communication can be improved.

Also, when performing data communication using a device connected to the modular jack 27 for data communication, the switches 12, 13 are in the open state and the telephone circuitry portion 14 is in a state disconnected from the telephone line, so that there is no interruption during data communication by audio communication signals, and the occurrence of data communication errors can be effectively prevented. In this example, data communication in-use display 18a such as shown in Fig. 2 is shown on the display 18 of the telephone set 10, so that it can be reliably understood from the display that the telephone line cannot be used from this telephone set 10; for example, a user who does not know that data communication is in progress will not mistakenly conclude that the telephone set is out of order.

As the detection means to perform this processing, a photocoupler 26 connected between the switch 25 and the modular jack 27 is used with respect to communication by the device connected to the modular jack 27; in addition to being designed for electrical non-contact detection, this photocoupler 26 is disconnected from the telephone circuit when the switches 24, 25 are in the open state, and so is not connected as a load to the telephone circuit connected to the telephone circuitry portion 14, and a decline in voice communication quality due to connection of extra circuitry during voice communication can be prevented.

With respect to detection of capture of the telephone line by this telephone set 10, the CPU 15 makes judgments based on hook operation signals from the hook switch and slave unit, so that there is no need for means to detect line capture from the state of the line connected to the telephone line, and increases in load due to connection of extra equipment during communication by equipment connected to the modular jack 27 can also be effectively prevented.

When the modular jack 27 for data communication of this telephone set 10 is used to install data communication equipment or other telephone sets, it is sufficient to connect in order two devices from the telephone line side, and there is no need for an automatic converter like that shown in Fig. 5 as in the example of the prior art, so that the connected configuration can be simplified.

In the example shown in Fig. 1, the modem of a computer device is connected to the modular jack 27 for data communication; however, similar functions and similar effects result when a telephone set is connected to the jack 27. [This invention] can also be applied in cases where the telephone set 10 incorporates fax device or other functions, and is provided with functions for fax communication or other data communication.

In the above-described embodiment, as the switches 12, 13, 24, 25 to cut off lines, semiconductor switches using photo-MOS relays were employed; however, switches having mechanical contacts may be used to configure relays which operate similarly.

In the above-described embodiment, detection of line capture for voice communication within the telephone set body is performed from hook operation signals from the hook switch or slave unit; however, the CPU 15 may instead judge the state within the telephone circuitry portion 14 and detect capture of the telephone line.

Having described preferred embodiments of the present invention with reference to the accompanying drawings, it is to be understood that the present invention is not limited to the above-mentioned embodiments and that various changes and modifications can be effected therein by one skilled in the art without departing from the spirit or scope of the present invention as defined in the appended claims.

## Claims

1. A telephone set, comprising:
a telephone line terminal for connection to a telephone line;
a telephone circuitry portion, connected to a telephone line connected to said line terminal, via a first switching means;
an external equipment terminal, connected to the telephone line connected to said line terminal, via a second switching means;
line capture detection means for detecting the capture of a telephone line by equipment connected to said external equipment terminal; and,
control means, which causes said first switching means to be disconnected while said line capture means detects line capture, and which causes said second switching means to be disconnected while said telephone circuitry portion detects telephone line capture, and which causes both of said switches to be in the connected state when neither of the respective line capture [states] is detected.

2. The telephone set according to Claim 1, wherein said line capture detection means is connected between said second switching means and said external equipment terminal.

3. The telephone set according to Claim 1 or 2, wherein said line capture detection means comprises a photocoupler, and said control means is capable of detecting line capture while electrically disconnected from the line between said second switching means and said external equipment terminal.

4. The telephone set according to Claim 1, 2 or 3 wherein said first and second switching means comprise relays which use semiconductor switches, and control of these relays is performed by said control means.
